# EUROPEAN PATENT APPLICATION

(11) **EP 4 620 686 A1**
(43) Date of publication of application: **24.09.2025**
(21) Application number: 25162830.1
(22) Date of filing: 11.03.2025
(51) Int. Cl.: B41J 2/21, G06K 15/10

(54) **LIQUID DISCHARGE APPARATUS, PRINTER, LIQUID DISCHARGE METHOD, AND CARRIER MEDIUM**

(30) Priority: 22.03.2024 JP 2024046118
(71) Applicant: Ricoh Company, Ltd., Tokyo 143-8555 (JP)
(72) Inventor: AKIYAMA, Kohta, Tokyo, 143-8555 (JP); YOSHIDA, Takahiro, Tokyo, 143-8555 (JP)
(74) Representative: SSM Sandmair

(57) **Abstract**

A liquid discharge apparatus includes multiple heads including a first head (100A) and a second head (100B), and a controller (1007). The controller (1007) forms a first mask pattern to select first discharge nozzles (1a) to discharge liquid droplets and first non-discharge nozzles (1b) not discharging the liquid droplets from first nozzles (1a, 1b) in first nozzle arrays (200) of the first head (100A) in a first overlapping region and a second mask pattern to select second discharge nozzles (2a) to discharge the liquid droplets and second non-discharge nozzles (2b) not discharging the liquid droplets from second nozzles (2a, 2b) in second nozzle arrays (200) of the second head (100B) in a second overlapping region. The controller (1007) causes a pattern of the first discharge nozzles (1a) in the first mask pattern to differ from a pattern of the second discharge nozzles (2a) in the second mask pattern.

## Description

### BACKGROUND

### Technical Field

The present disclosure relates to a liquid discharge apparatus, a printer, a liquid discharge method, and a carrier medium carrying computer readable code.

### Related Art

Currently, a liquid discharge apparatus increases a conveyance speed of a discharge target to achieve high productivity and uses a wide medium (print medium) as the discharge target. When multiple discharge heads are arranged to form a long head group so as to use the wide print medium, nozzles at end portions of adjacent heads are overlapped with each other, and discharge nozzles and non-discharge nozzles are selected in an overlapping region to prevent deterioration of image quality due to positioning accuracy between the heads or variations of discharge of the heads in the overlapping region.

Japanese Unexamined Patent Application Publication No. 2009-160876 discloses a technique in which one nozzle unit performs a first printing operation on one band region and another nozzle unit performs a second printing operation on another band region, and a density at a print position corresponding to the first printing operation decreases as a distance from a non-overlapping region of the band region corresponding to the first printing operation increases.

However, with such a technique, image quality may be deteriorated due to deflection or variations of discharged liquid droplets caused by a strong airflow generated by the medium conveyed at a high conveyance speed of 200 mm/s or more.

### SUMMARY

The present disclosure has been made in view of the above, and an object of the present disclosure is to prevent the deterioration of image quality due to deflection or variations of discharged liquid droplets caused by a strong airflow.

The present disclosure described herein provides an improved liquid discharge apparatus including multiple heads and a controller. The multiple heads discharge liquid droplets onto a medium in a discharge direction to form an image on the medium conveyed in a conveyance direction orthogonal to the discharge direction. The multiple heads include a first head and a second head. The first head has first nozzle arrays each having first nozzles arrayed in an array direction orthogonal to the discharge direction and the conveyance direction. The first nozzle arrays are arrayed in the conveyance direction and have a first overlapping region at one end of the first head in the array direction. The second head is disposed adjacent to the first head in the conveyance direction. The second head has second nozzle arrays each having second nozzles arrayed in the array direction. The second nozzle arrays are arrayed in the conveyance direction and have a second overlapping region at another end of the second head opposite to the one end of the first head in the array direction. The second overlapping region is overlapped with the first overlapping region in the array direction. The controller forms a first mask pattern and a second mask pattern. The first mask pattern selects first discharge nozzles to discharge the liquid droplets and first non-discharge nozzles not discharging the liquid droplets from the first nozzles in the first nozzle arrays in the first overlapping region. The second mask pattern selects second discharge nozzles to discharge the liquid droplets and second non-discharge nozzles not discharging the liquid droplets from the second nozzles in the second nozzle arrays in the second overlapping region. The controller controls the first head and the second head to alternately discharge the liquid droplets from the first discharge nozzles and the second discharge nozzles in the same row in the array direction on the medium, and discharge the liquid droplets from only one of the first discharge nozzles or the second discharge nozzles in the same column in the conveyance direction on the medium. Further, the controller causes a pattern of the first discharge nozzles in the first mask pattern to differ from a pattern of the second discharge nozzles in the second mask pattern.

Further, the present disclosure described herein provides an improved liquid discharge method and a carrier medium carrying computer readable code for controlling a computer system to carry out a method. The liquid discharge method (method) includes discharging liquid droplets onto a medium from multiple heads in a discharge direction to form an image on the medium conveyed in a conveyance direction orthogonal to the discharge direction. The multiple heads include a first head and a second head. The first head has first nozzle arrays each having first nozzles arrayed in an array direction orthogonal to the discharge direction and the conveyance direction. The first nozzle arrays are arrayed in the conveyance direction and have a first overlapping region at one end of the first head in the array direction. The second head is disposed adjacent to the first head in the conveyance direction. The second head has second nozzle arrays each having second nozzles arrayed in the array direction. The second nozzle arrays are arrayed in the conveyance direction and have a second overlapping region at another end of the second head opposite to the one end of the first head in the array direction. The second overlapping region is overlapped with the first overlapping region in the array direction. The liquid discharge method (method) further includes forming a first mask pattern and a second mask pattern. The first mask pattern selects first discharge nozzles to discharge the liquid droplets and first non-discharge nozzles not discharging the liquid droplets from the first nozzles in the first nozzle arrays in the first overlapping region. The second mask pattern selects second discharge nozzles to discharge the liquid droplets and second non-discharge nozzles not discharging the liquid droplets from the second nozzles in the second nozzle arrays in the second overlapping region. The liquid discharge method (method) further includes controlling the first head and the second head to alternately discharge the liquid droplets from the first discharge nozzles and the second discharge nozzles in the same row in the array direction on the medium and discharge the liquid droplets from only one of the first discharge nozzles or the second discharge nozzles in the same column in the conveyance direction on the medium. The liquid discharge method (method) further includes causing a pattern of the first discharge nozzles in the first mask pattern to differ from a pattern of the second discharge nozzles in the second mask pattern.

As a result, according to one aspect of the present disclosure, the deterioration of image quality caused by deflection or variations of discharged liquid droplets due to a strong airflow can be prevented.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a configuration of a printer;
FIG. 2 is a plan view of a head unit of the printer of FIG. 1;
FIG. 3 is a plan view of multiple heads adjacent to each other;
FIG. 4 is a block diagram illustrating a system configuration of a printer;
FIG. 5 is a functional block diagram illustrating control for discharging liquid droplets from nozzles by a print controller;
FIG. 6 is a diagram illustrating landed dots in the vicinity of a nozzle overlapping region according to a comparative example;
FIG. 7 is a graph illustrating a relationship between a drive frequency and a droplet volume according to a comparative example;
FIG. 8 is a diagram illustrating landed dots formed with a small droplet volume according to a comparative example;
FIGS. 9A and 9B are diagrams each illustrating landed dots when liquid droplets discharged from two heads land and are superimposed one on another in an overlapping area according to a comparative example;
FIG. 10 is another diagram illustrating landed dots in the vicinity of a nozzle overlapping region according to a comparative example;
FIG. 11 is a diagram illustrating landed dots in the vicinity of a nozzle overlapping region formed with a mask pattern according to an embodiment of the present disclosure;
FIG. 12 is another diagram illustrating landed dots in the vicinity of a nozzle overlapping region formed with a mask pattern according to an embodiment of the present disclosure;
FIG. 13 is still another diagram illustrating landed dots in the vicinity of a nozzle overlapping region formed with a mask pattern according to an embodiment of the present disclosure; and
FIG. 14 is a schematic diagram of an electrode manufacturing apparatus.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A liquid discharge apparatus, a printer, a liquid discharge method, and a carrier medium are described in detail below with reference to the accompanying drawings.

### First Embodiment

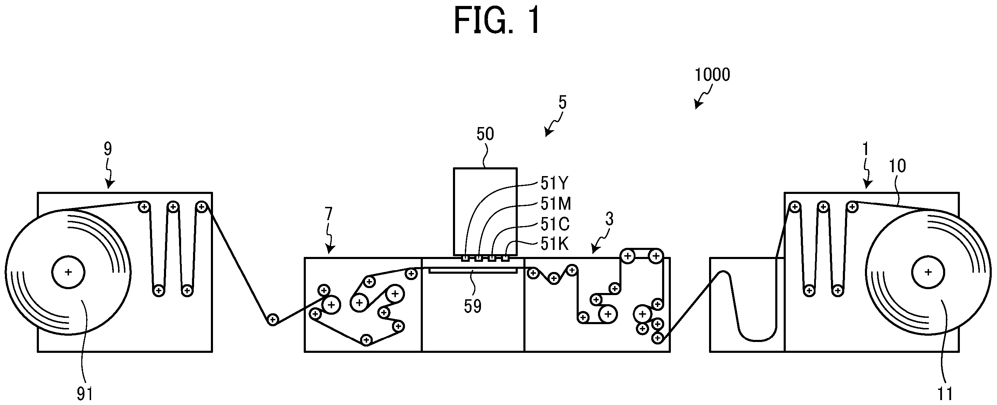

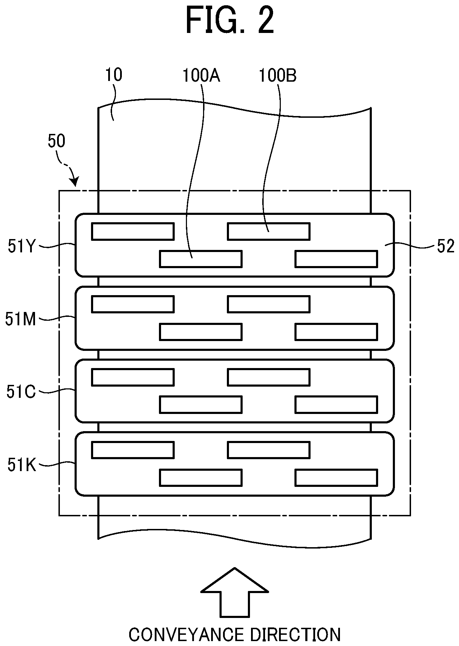

FIG. 1 is a schematic diagram illustrating a configuration of a printer 1000. FIG. 2 is a plan view of a head unit 50 of the printer 1000. The printer 1000 illustrated in FIG. 1 is a line type inkjet recording apparatus including the line head unit 50.

The printer 1000 as a liquid discharge apparatus includes a loading device 1, a guide conveyor 3, a printing device 5, a drying device 7, and an ejection device 9.

The loading device 1 loads a medium 10. The guide conveyor 3 as a conveyor guides and conveys the medium 10 from the loading device 1 to the printing device 5. The printing device 5 includes the head unit 50 and performs printing to form an image on the medium 10 by discharging liquid onto the medium 10. The drying device 7 dries the medium 10. The ejection device 9 collects the medium 10 ejected from the drying device 7.

The medium 10 is fed from a winding roller 11 of the loading device 1, guided and conveyed with rollers of the loading device 1, the guide conveyor 3, the drying device 7, and the ejection device 9, and wound around a take-up roller 91 of the ejection device 9. For example, the medium 10 is conveyed at a high speed of about 100 m/min in the printer 1000.

In the printing device 5, the medium 10 is conveyed on a conveyance guide 59 so as to face the head unit 50. When the medium 10 is conveyed on the conveyance guide 59, the head unit 50 discharges liquid onto the medium 10 to form an image on the medium 10.

The head unit 50 includes, for example, full-line head arrays 51K, 51C, 51M, and 51Y for four colors from the upstream side in a conveyance direction of the medium 10. The full-line head arrays 51K, 51C, 51M, and 51Y may be referred to simply as the "head array 51" when colors are not distinguished.

Each of the head arrays 51 is a liquid discharge device to discharge liquid (e.g., ink) of black (K), cyan (C), magenta (M), or yellow (Y) onto the medium 10 conveyed in the conveyance direction. The number and types of colors are not limited to the above-described four colors of K, C, M, and Y and may be any other suitable number and types.

In each head array 51, for example, as illustrated in FIG. 2, multiple heads including liquid discharge heads 100A and 100B (may be referred to simply as heads 100A and 100B) are disposed in a staggered arrangement on a base 52 to form the head array 51. The head array 51 is not limited to such an arrangement. The heads 100A and 100B may be referred to simply as a head 100 unless distinguished in the following description. The head 100A is an upstream head in the conveyance direction, and the head 100B is a downstream head downstream from the head 100Ain the conveyance direction. Thus, multiple heads 100 are arranged adjacent to each other to print on a wide medium. The configuration of the head array 51 is not limited to the above-described configuration.

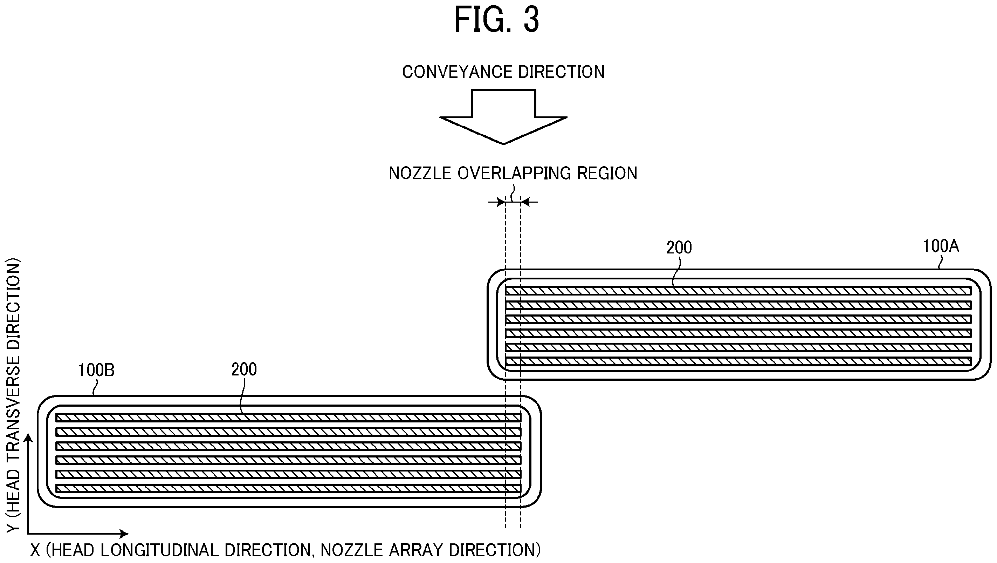

FIG. 3 is a plan view of multiple heads (e.g., the head 100A and the head 100B) adjacent to each other. Each of the head 100A and the head 100B is a line type head having multiple nozzle arrays each having multiple nozzles (discharge nozzles) arrayed to discharge liquid. In FIG. 3, the number of rows of the nozzle arrays included in each head 100 is six, but the number of rows of the nozzle arrays is not limited to six. As illustrated in FIG. 3, each of the head 100A and the head 100B includes multiple nozzle arrays 200 arranged side by side in the transverse direction of the head 100 (Y direction). In each of the multiple nozzle arrays 200, multiple nozzles are arrayed in the longitudinal direction of the head 100, i.e., an array direction of the multiple nozzles (X direction). The head 100A has overlapped nozzles in one end of the multiple nozzles in the array direction (i.e., a first overlapping region), and the head 100B has overlapped nozzles in the other end of the multiple nozzles in the array direction (i.e., a second overlapping region). The overlapped nozzles of the head 100A (i.e., the first overlapping region) are overlapped with the overlapped nozzles of the head 100B (i.e., the second overlapping region) in a nozzle overlapping region in the array direction of the multiple nozzles (X direction). A conveyance airflow is generated in the same direction as the conveyance direction of the medium 10 directly below the multiple nozzles. The conveyance airflow becomes faster in proportion to the conveyance speed of the medium 10. The "conveyance direction" is a direction in which the medium 10 is moved (conveyed) relative to the head 100.

In the present embodiment, the line type inkjet recording apparatus as the printer 1000 is described, but an embodiment of the present disclosure is not limited thereto. An embodiment of the present disclosure can be similarly applied to a serial type (shuttle type) inkjet recording apparatus in which a carriage is moved (scanned). In both the line type and the serial type, a head on the upstream side (upstream in the conveyance direction of the medium) in the relative movement direction of the medium 10 relative to the head 100 is referred to as the head 100A, and a head on the downstream side (downstream in the conveyance direction of the medium) is referred to as the head 100B. In other words, the phrase "the medium is conveyed relative to the head 100 in the conveyance direction" includes a case in which the head 100 is moved (conveyed) relative to the medium 10 not in motion. In this case, the "upstream" and "downstream" are determined based on the relative movement direction of the medium 10.

A system configuration of the printer 1000 will be described below.

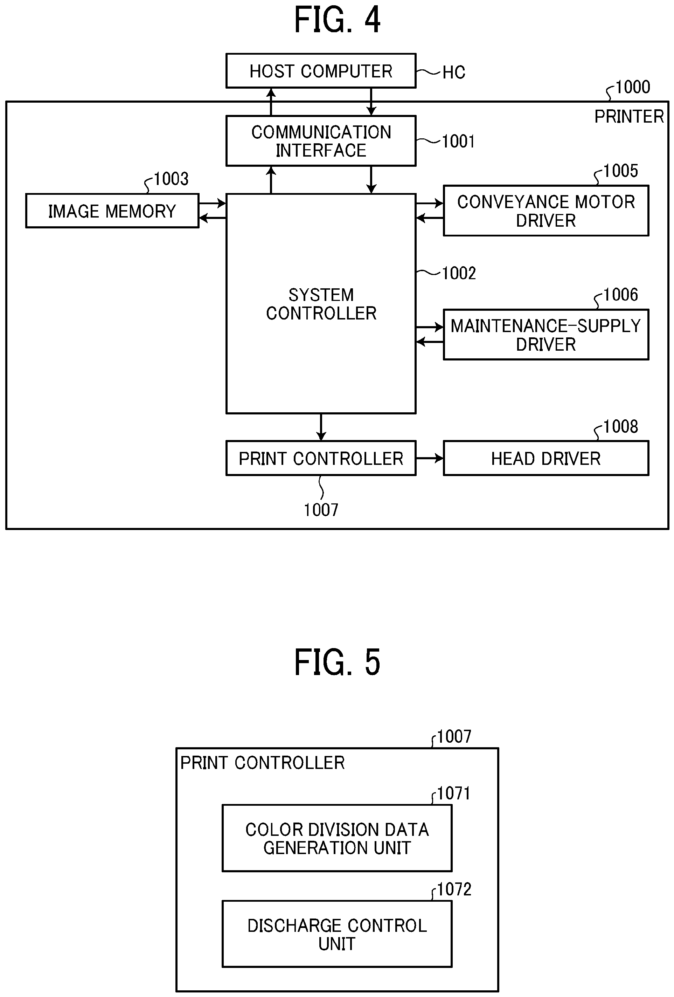

FIG. 4 is a block diagram illustrating a system configuration of the printer 1000. As illustrated in FIG. 4, the printer 1000 includes a communication interface 1001, a system controller 1002, an image memory 1003, a conveyance motor driver 1005, a maintenance-supply driver 1006, a print controller 1007, and a head driver 1008.

The communication interface 1001 is an interface unit that receives image data transmitted from a host computer HC. The image data transmitted from the host computer HC is taken into the printer 1000 via the communication interface 1001, and is temporarily stored in the image memory 1003.

The image memory 1003 is a storage unit that temporarily stores the image data input via the communication interface 1001. Data is read from and written to the image memory 1003 via the system controller 1002.

The system controller 1002 as a system circuitry includes a central processing unit (CPU) and peripheral circuits thereof. The system controller 1002 functions as a control device that controls the entire printer 1000 in accordance with a predetermined program, and also functions as an arithmetic device that performs various arithmetic operations. In other words, the system controller 1002 controls the respective units such as the communication interface 1001, the image memory 1003, the conveyance motor driver 1005, and the maintenance-supply driver 1006. The system controller 1002 also controls the print controller 1007 to drive the head 100 to discharge liquid.

The image memory 1003 stores programs executed by the CPU of the system controller 1002 and various data for control. The image memory 1003 is used as a temporary storage area for image data, and is also used as a program development area and a calculation work area for the CPU.

The conveyance motor driver 1005 is a driver to drive motors, for example, in the loading device 1, the guide conveyor 3, and the ejection device 9 in accordance with instructions from the system controller 1002. The conveyance motor driver 1005 is a mover that moves the medium 10.

The maintenance-supply driver 1006 is a driver to drive a supply-system block that controls the driving of liquid feed pumps and solenoid valves for the heads 100A and 100B, and a maintenance-system block that controls the driving of suction pumps and solenoid valves connected to caps for the heads 100A and 100B, in accordance with instructions from the system controller 1002.

The print controller 1007 has a signal processing function of performing, for example, various processes and corrections for generating a print control signal from the image data in the image memory 1003 in accordance with instructions from the system controller 1002. The print controller 1007 is a controller that supplies the generated print data (dot data) to the head driver 1008. The print controller 1007 controls a discharge amount (volume) and a discharge timing of liquid droplets discharged from the heads 100A and 100B via the head driver 1008 based on image data on which a desired signal processing is performed. Thus, an image is formed with a desired dot size and dot arrangement of the liquid droplets.

The head driver 1008 includes a drive circuit that generates drive signals to be applied to piezoelectric elements of the heads 100A and 100B based on the image data transmitted from the print controller 1007 and applies the drive signals to the piezoelectric elements to drive the piezoelectric elements.

FIG. 5 is a functional block diagram illustrating control for discharging liquid droplets from the nozzles by the print controller 1007. The print controller 1007 includes a color division data generation unit 1071 and a discharge control unit 1072. Roughly speaking, the discharge control unit 1072 controls discharge of liquid (liquid droplets).

When the color division data generation unit 1071 receives image data to be printed, the color division data generation unit 1071 generates color division data for each color of liquid used in the printer 1000 from the received image data. For example, when the printer 1000 uses liquids of C, M, Y, and K, the color division data generation unit 1071 generates color division data for each color of C, M, Y, and K from the received image data.

The discharge control unit 1072 applies a dot-data generation mask to the color division data of each color generated by the color division data generation unit 1071 to generate printed-dot data. The dot-data generation mask is, for example, a mask pattern for forming an image with printed dots mixed by the two adjacent heads 100A and 100B in the nozzle overlapping region (may be referred to simply as an overlapping region) of the ends of the adjacent heads 100A and 100B. The discharge control unit 1072 is a controller that controls the discharge of liquid droplets from the nozzles.

The liquid applied onto the medium 10 is fixed to the medium 10 to form dots in an image. More specifically, one liquid droplet formed by the liquid discharged from the head 100A or 100B lands on the medium 10, and then is dried and fixed to the medium 10. Thus, one dot in the image is formed on the medium 10. The image is formed as an aggregate of multiple dots. In the present embodiment, a portion including the heads 100A and 100B, and the print controller 1007 and the head driver 1008 which are functional units for controlling the heads 100A and 100B may be referred to as a liquid discharge apparatus. In this case, the liquid discharge apparatus is included in the printer 1000.

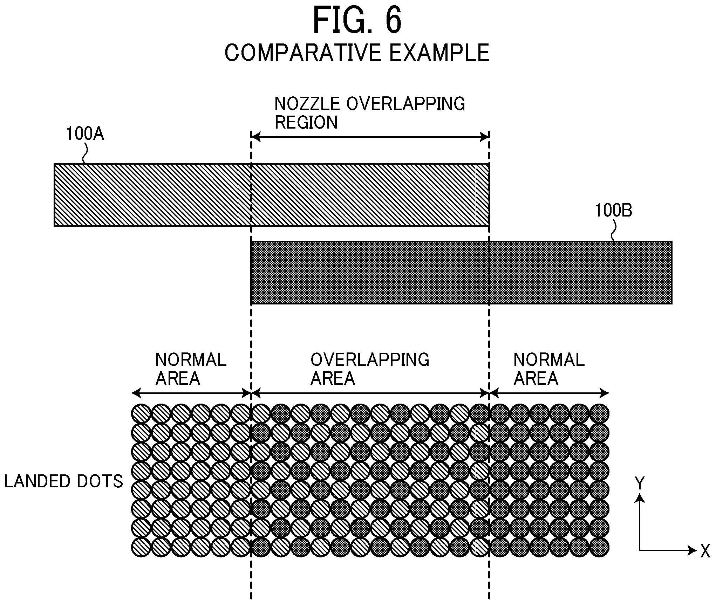

A description will be given below of the deterioration of image quality in the nozzle overlapping region when a mask pattern according to a comparative example is used as the dot-data generation mask, with reference to FIGS. 6 to 10.

FIG. 6 is a diagram illustrating landed dots in the vicinity of a nozzle overlapping region according to a comparative example. The landed dots illustrated in FIG. 6 indicate dots formed, with the mask pattern according to the comparative example, of liquid droplets that are discharged from the head 100A and the head 100B and land at ideal positions on the medium 10. The landed dots are formed on the medium 10 in rows extending in the array direction (X direction) and columns extending in the conveyance direction (Y direction) to form an image on the medium 10. In FIG. 6, a normal area of the landed dots on the left side is formed by only the liquid droplets discharged from the head 100A, and the normal area on the right side is formed by only the liquid droplets discharged from the head 100B. An overlapping area of the landed dots is formed by the liquid droplets discharged from the nozzles in the nozzle overlapping region of the heads 100A and 100B. In other words, in the nozzle overlapping region, the mask pattern selects (determines) discharge nozzles from which liquid droplets are discharged or non-discharge nozzles from which the liquid droplets are not discharged to form the overlapping area of the landed dots with the liquid droplets discharged from the heads 100A and 100B.

The overlapping area in FIG. 6 is formed by processing of alternately arranging a dot formed by the head 100A and a dot formed by the head 100B in both the X direction and the Y direction. The overlapping area is formed of the mixed dots formed by the two heads 100A and 100B with the processing described above. Accordingly, the deterioration of image quality due to, for example, density unevenness or streaks caused by variations of discharge properties of the head 100A and the head 100B or the deviation of landing positions caused by an airflow at the ends of the heads 100A and 100B can be prevented.

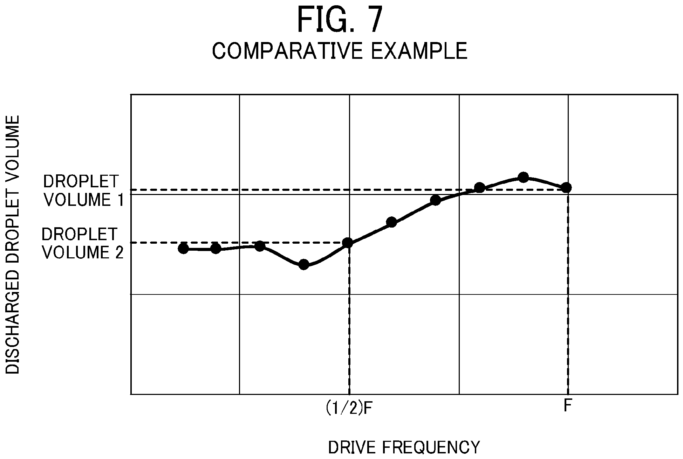

However, the volume of one liquid droplet discharged from the head (i.e., discharged droplet volume) typically varies depending on drive frequency. FIG. 7 is a graph illustrating a relationship between the drive frequency and the discharged droplet volume. In FIG. 7, the volume of one liquid droplet decreases from a droplet volume 1 at the drive frequency F to a droplet volume 2 at the drive frequency (1/2) F.

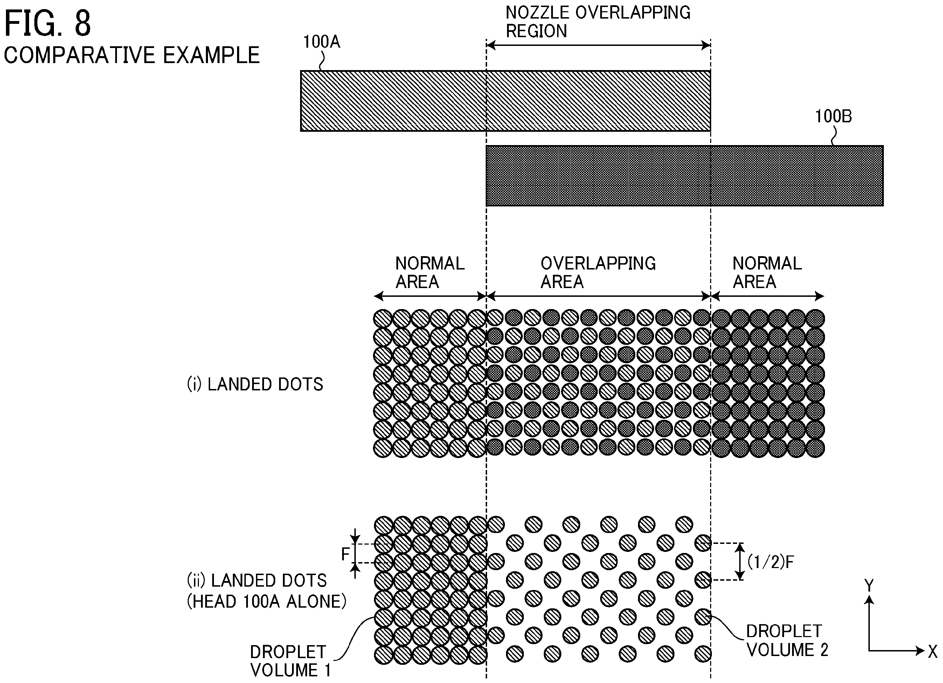

FIG. 8 is a diagram illustrating landed dots formed with a small droplet volume according to a comparative example. In FIG. 8, "(i) landed dots" indicates dots from the two heads 100A and 100B, and "(ii) landed dots" indicates only dots from the head 100A. As illustrated in FIG. 8, the normal area is formed by dots with the droplet volume 1, and the overlapping area is formed by dots with the droplet volume 2. As a result, the overlapping area is visually recognized to be thinner in image density than the normal area, resulting in white unevenness.

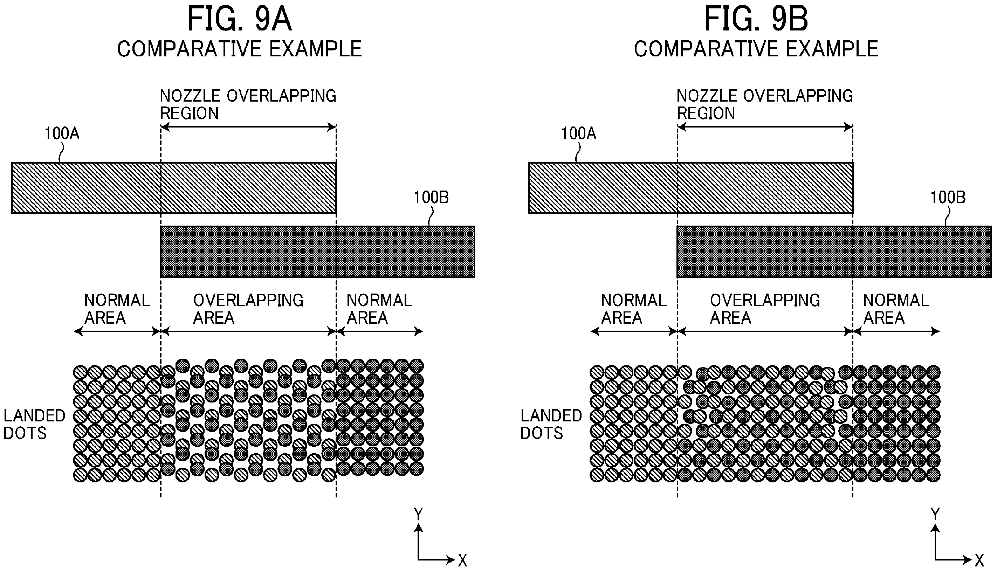

When the two heads 100A and 100B have a positional deviation or a difference in droplet speed, the landing positions of dots from one of the heads 100A and 100B may be deviated relative to the landing positions of dots from the other. FIGS. 9A and 9B are diagrams each illustrating landed dots when liquid droplets discharged from the heads 100A and 100B land and are superimposed one on another in the overlapping area.

FIG. 9A illustrates landed dots from the head 100B deviated in the Y direction in the overlapping area. Such a deviation of the landing positions may cause the overlapping area to be different in image density from the normal area. As a result, the deterioration of image quality such as density unevenness or streaks may be visually recognized. Further, the landing positions may be deviated due to the influence of a self-airflow generated when liquid droplets are discharged or the conveyance airflow. In addition, when the medium 10 is conveyed in the direction from the head 100A toward the 100B, the landing positions may be deviated as described above due to the influence of the airflow disturbed by the outer shape of the head 100A disposed upstream from the head 100B in the conveyance direction. Such a deviation of the landing positions may become larger when the conveyance speed of the medium 10 relative to the head 100 is higher, for example, when the relative speed between the head 100 and the medium 10 exceeds 200 mm/s and the distance between the discharge nozzles of the head 100 and the medium 10 exceeds 1.0 mm. The relative speed between the head 100 and the medium 10 means the speed of the relative movement of the medium 10 relative to the head 100.

FIG. 9B illustrates landed dots from the head 100A and the head 100B deviated from each other in the X direction in the overlapping area. Depending on the shape of the head 100 and the arrangement of the nozzles, the liquid droplets may be affected by the influence of the airflow generated by the outer periphery of the head 100 or the corner thereof, and thus the landing positions may be deviated as illustrated in FIG. 9B, resulting in the deterioration of image quality.

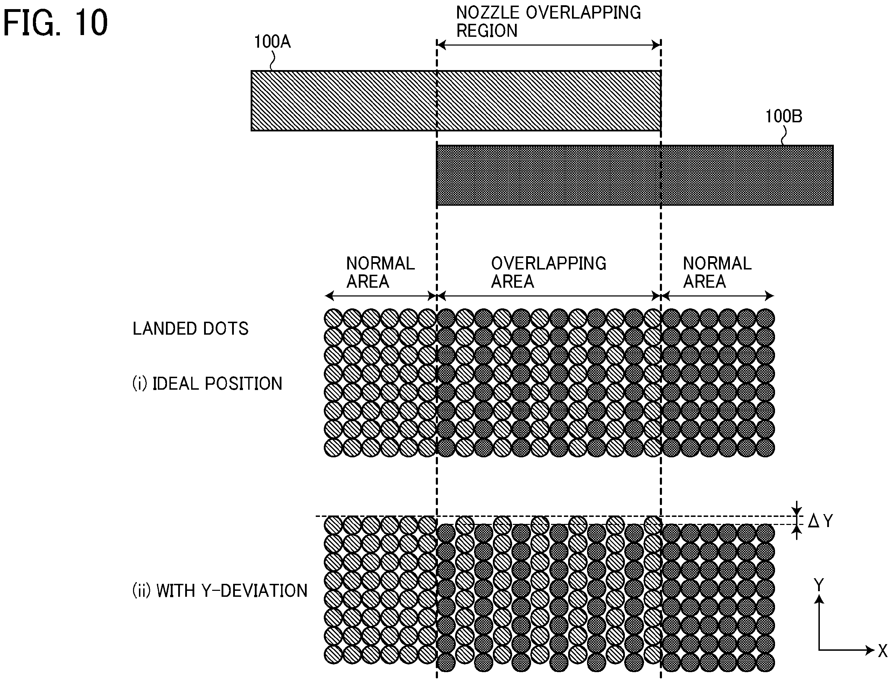

FIG. 10 is another diagram illustrating landed dots in the vicinity of a nozzle overlapping region according to a comparative example. In FIG. 10, "(i) landed dots" indicate dots formed, with a mask pattern according to the comparative example, of liquid droplets that are discharged from the head 100A and the head 100B and land at ideal positions on the medium 10. In this example, the landed dots arranged in the same colume in the Y direction are formed by the dots from either one of the head 100A or the head 100B in the overlapping area. By so doing, the drive frequency of each nozzle can be the same in the overlapping area and the normal area, and thus the deterioration of image quality due to the difference in the drive frequency described above can be prevented. Even if the dots from the head 100B are deviated by ΔY in the Y direction (i.e., Y-deviation), the dots from the two heads 100A and 100B are not superimposed one on another and land as illustrated in "(ii) with Y-deviation" in FIG. 10. As a result, the deterioration of image quality such as the density unevenness illustrated in FIGS. 9A and 9B and streaks can be prevented.

However, the head 100 using the mask pattern according to the comparative example does not prevent the deterioration of image quality when the relative speed between the head 100 and the medium 10 exceeds 200 mm/s and the distance between the discharge nozzles of the head 100 and the medium 10 exceeds 1.0 mm. In the present embodiment, each head 100 has multiple nozzle arrays each having multiple nozzles arrayed in the array direction, and the discharge nozzles to discharge liquid droplets and the non-discharge nozzles not to discharge the liquid droplets are controlled to prevent the deterioration of image quality described above.

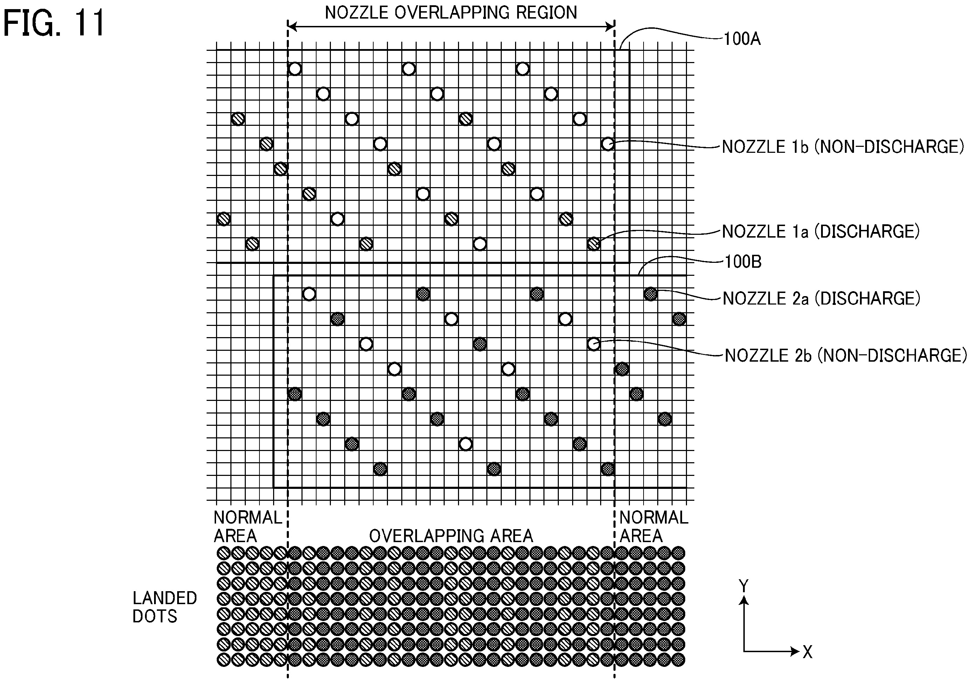

FIG. 11 is a diagram illustrating landed dots in the vicinity of the nozzle overlapping region formed with a mask pattern (i.e., a first mask pattern and a second mask pattern) according to the present embodiment. In the nozzle overlapping region, liquid droplets landed in the same row in the array direction of the multiple nozzles (X direction) are discharged from the nozzles of the head 100A and the nozzles of the head 100B, and liquid droplets landed in the same colume in a direction (i.e., the conveyance direction) orthogonal to the array direction (Y direction) are discharged from either one of the nozzles of the head 100A or the nozzles of the head 100B, which is the same as the description in FIG. 10. The direction orthogonal to the array direction is the conveyance direction which may be referred to as an orthogonal direction.

In the present embodiment, the mask pattern that selects (determines) the discharge nozzles (e.g., discharge nozzles 1a and 2a) and the non-discharge nozzles (e.g., non-discharge nozzles 1b and 2b) is changed in the Y direction. Specifically, the number of the discharge nozzles of the head 100A which is disposed upstream from the head 100B in the conveyance direction is smaller than the number of the discharge nozzles of the head 100B. The head 100A disposed upstream from the head 100B is likely to be affected by the conveyance airflow. For example, even when the relative speed between the medium 10 and the heads 100A and 100B exceeds 200 mm/s and the distance between the medium 10 and the discharge nozzles of the heads 100A and 100B exceeds 1.0 mm (i.e., predetermined conditions), such an arrangement of the discharge nozzles in the heads 100A and 100B can reduce the influence of airflow, such as discharge deflection.

In a liquid discharge head that can selectively discharge multiple types of liquid droplets having different volumes, such as large droplets (liquid droplets having a first volume) and small droplets (liquid droplets having a second volume smaller than the first volume), the number (ratio) of the discharge nozzles for discharging the small droplets may be smaller in the head 100A than in the head 100B in the nozzle overlapping region. The large droplets are unlikely to be deflected by the airflow. Accordingly, the head 100A, which is likely to be affected by the airflow, discharges many large droplets to enhance image quality.

On the other hand, when the relative speed between the medium 10 and the heads 100A and 100B is equal to or less than 200 mm/s or the distance between the medium 10 and the discharge nozzles of the heads 100A and 100B is equal to or less than 1.0 mm, the numbers of the discharge nozzles of the two heads 100A and 100B are substantially the same, and the liquid droplets discharged from the head 100A and the liquid droplets discharged from the head 100B are uniformly mixed in the nozzle overlapping region. As a result, image density gradually changes in a head joint portion between the heads 100A and 100B, and thus the difference in the image density between the heads 100A and 100B is unlikely to be visually recognized. Although the number of dots in the X direction in the overlapping area is 23 in FIG. 11, the number of dots in the overlapping area may be larger or smaller than 23.

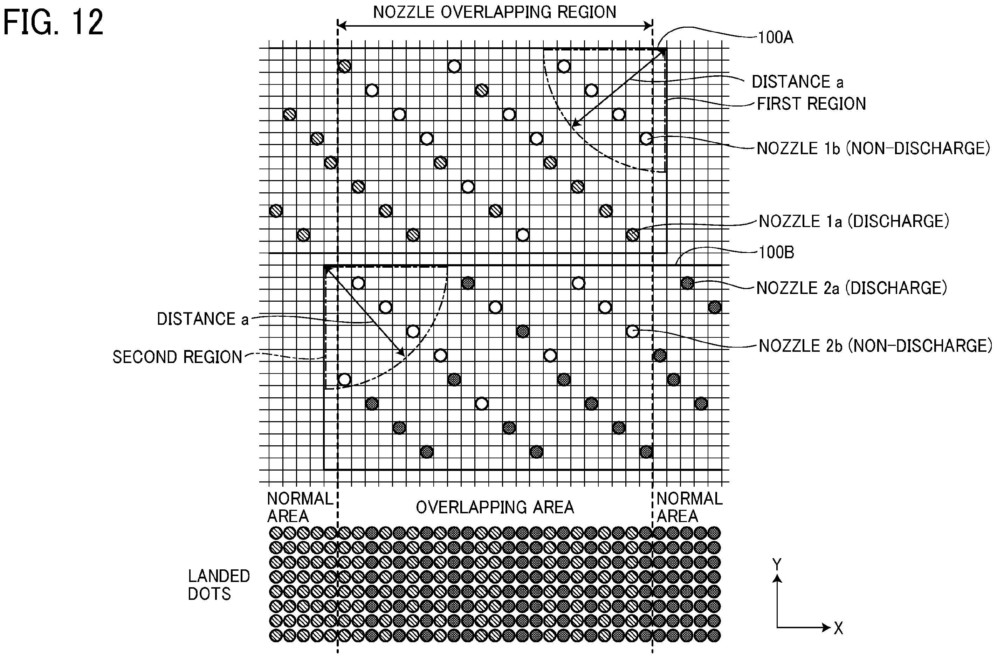

FIG. 12 is another diagram illustrating landed dots in the vicinity of the nozzle overlapping region formed with a mask pattern according to the present embodiment. The difference from the description with reference to FIG. 11 is that the non-discharge nozzles are arranged in at least the region defined by a "distance a" (i.e., a first region and a second region illustrated in FIG. 12). For example, even when the relative speed between the medium 10 and the heads 100A and 100B exceeds 200 mm/s and the distance between the medium 10 and the discharge nozzles of the heads 100A and 100B exceeds 1.0 mm, such an arrangement of the discharge nozzles in the heads 100A and 100B can reduce the influence on the discharge deflection of the heads 100A and 100B. The discharge deflection is caused by the airflow generated by the speed difference between the medium 10 and the heads 100A and 100B.

The first region of the head 100A and the second region of the head 100B may be regions (upstream regions) adjacent to the end of the heads 100A and 100B on the upstream side (upstream in the conveyance direction of the medium 10) in the direction of the relative movement of the medium 10 relative to the heads 100A and 100B, and are not limited to regions within the distances a from the corners of the heads 100A and 100B, respectively. For example, these regions are determined in advance by experiments in accordance with the outer shape of the heads 100A and 100B, the conveyance speed (relative speed), a resolution of the liquid droplets, or a volume of the liquid droplets.

Instead of setting all the nozzles included in the upstream region as the non-discharge nozzles, the ratio of the number of the discharge nozzles included in the upstream region may be set to be smaller than the ratio of the number of the discharge nozzles in the region other than the upstream region. Such an arrangement of the non-discharge nozzles can increase the degree of flexibility to design the mask pattern and enhance image quality.

In the liquid discharge head that can selectively discharge the multiple types of liquid droplets described above, the ratio of the number of the discharge nozzles for discharging liquid droplets (e.g., the large droplets as the liquid droplets having the first volume) other than the small droplets (e.g., the liquid droplets having the second volume) may be larger in the upstream region than in any region other than the upstream region. Accordingly, the large droplet, which is unlikely to be deflected by the airflow, is discharged in the upstream region where the airflow is likely to be generated to enhance image quality.

In FIG. 12, the heads 100A and 100B have a rectangular nozzle face, and a region defined by the distance a from the corner on the upstream side in the conveyance direction of the medium 10 is defined as the upstream region, but as described above, the upstream region is not limited thereto. For example, when a head has a projection or a recess (a shape other than a rectangle) in the outer shape thereof and an airflow related to discharge deflection is generated due to the projection or the recess, a range within a predetermined distance from the projection or the recess as a base point may be defined as the upstream region.

Further, the upstream regions of the heads 100A and 100B may be set using different distances, for example, the upstream region of the head 100A is defined by the distance a and the upstream region of the head 100B is defined by a distance b. For example, the area (size) of the upstream region of the head 100A may be larger than the area (size) of the upstream region of the head 100B, and the ratio of the number of the discharge nozzles in the upstream region of the head 100A may be smaller than the ratio of the number of the discharge nozzles in the upstream region of the head 100B. Accordingly, the influence of the airflow on the head 100A, which is likely to be affected by the conveyance airflow, is further reduced to further enhance image quality.

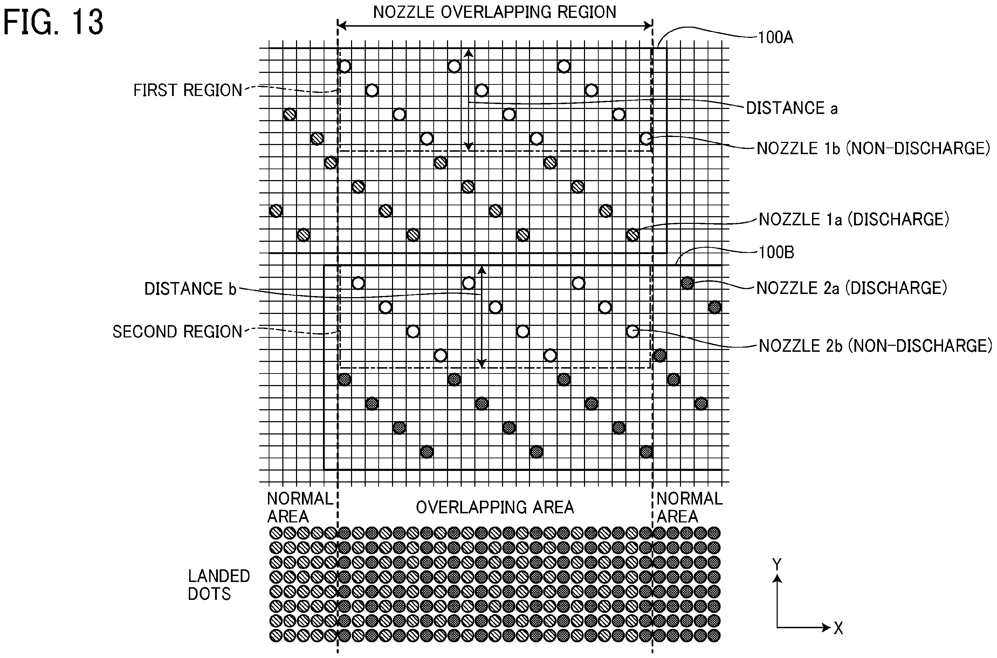

FIG. 13 is still another diagram illustrating landed dots in the vicinity of the nozzle overlapping region formed with a mask pattern according to the present embodiment. The difference from the description with reference to FIG. 12 is that the upstream regions (i.e., the first region of the head 100A and the second region of the head 100B) are defined by the distances a and b from the upstream sides of the heads 100A and 100B instead of the corners of the heads 100A and 100B on the upstream side, respectively.

The ratio of the number of the non-discharge nozzles is increased or the ratio of the number of the discharge nozzles for discharging the small droplets is increased in the upstream region defined as illustrated in FIG. 13. Accordingly, similarly to the example of FIG. 12, for example, even when the relative speed between the medium 10 and the heads 100A and 100B exceeds 200 mm/s and the distance between the medium 10 and the discharge nozzles of the heads 100A and 100B exceeds 1.0 mm, such an arrangement of the non-discharge nozzles or the discharge nozzles in the heads 100A and 100B can reduce the influence of airflow, such as discharge deflection.

On the other hand, when the relative speed between the medium 10 and the heads 100A and 100B is equal to or less than 200 mm/s or the distance between the medium 10 and the discharge nozzles of the heads 100A and 100B is equal to or less than 1.0 mm, the numbers of the discharge nozzles of the two heads 100A and 100B are substantially the same, and the liquid droplets discharged from the head 100A and the liquid droplets discharged from the head 100B are uniformly mixed in the nozzle overlapping region. As a result, image density gradually changes in a head joint portion between the heads 100A and 100B, and thus the difference in the image density between the heads 100A and 100B is unlikely to be visually recognized.

As described above, according to the present embodiment, the mask pattern that selects the discharge nozzles and the non-discharge nozzles is changed in the Y direction. For example, the ratio of the number of the non-discharge nozzles can be reduced in the upstream region, and the ratio of the number of the discharge nozzles that discharges the large droplets can be increased. As a result, the deterioration of image quality due to deflection or variations of the discharged liquid droplets due to a strong airflow can be prevented.

In FIG. 12 or 13, the ratio of the number of the non-discharge nozzles or the ratio of the number of the discharge nozzles that discharges the large droplets may be different between the first region and the second region. For example, the ratio of the number of the non-discharge nozzles in the first region may be smaller than the ratio of the number of the non-discharge nozzles in the second region. The ratio of the number of the discharge nozzles that discharges the large droplets in the first region may be larger than the ratio of the number of the discharge nozzles that discharges the large droplets in the second region. Accordingly, for example, the usage rate of the nozzles of the upstream head can be reduced, and the ratio of the number of the nozzles that discharges the large droplets in the upstream head in the conveyance direction of the medium can be increased. As a result, the deterioration of image quality due to deflection or variations of the discharged liquid droplets due to a strong airflow can be prevented.

### Second Embodiment

A description is given below of a second embodiment of the present disclosure. In the following description of the second embodiment, descriptions of elements identical or similar to those in the first embodiment are omitted, and differences from the first embodiment are described.

### Electrode Manufacturing Apparatus

The printer 1000 as the liquid discharge apparatus may also include an apparatus for manufacturing an electrode and an electrochemical element that is also referred to as an electrode manufacturing apparatus. The electrode manufacturing apparatus is described below.

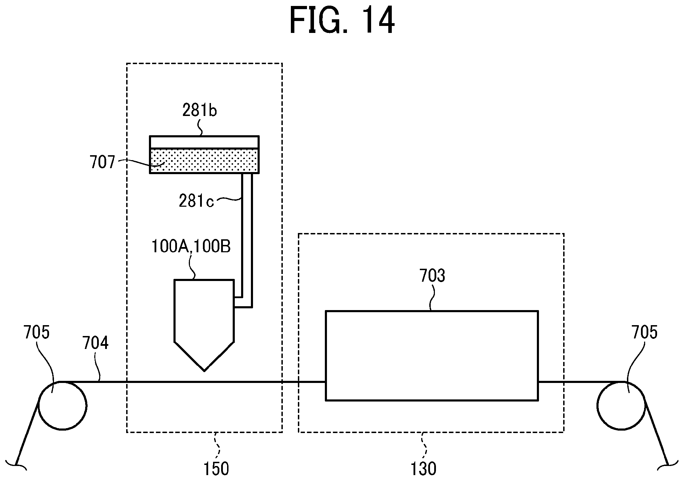

FIG. 14 is a schematic diagram of an electrode manufacturing apparatus according to a second embodiment of the present disclosure. The electrode manufacturing apparatus is an apparatus for manufacturing an electrode including a layer containing an electrode material by discharging a liquid composition using a head module (head unit) including the heads 100A and 100B described in the first embodiment.

### Device for Forming Layer Containing Electrode Material and Process of Forming Layer Containing Electrode Material

A discharge device in the electrode manufacturing apparatus illustrated in FIG. 14 is the head module. The liquid discharge head (head) of the head module discharges a liquid composition. By so doing, the liquid composition is applied onto an object, and a liquid composition layer is formed on the object. The object, which may also be referred to as a discharge target in the following description, is not limited to any particular object and may be appropriately selected depending on the intended purpose, as long as the object is an object on which a layer containing an electrode material is to be formed. Examples of the object include an electrode substrate, i.e., a current collector, an active material layer, and a layer containing a solid electrode material. The object may be an electrode composite layer containing an active material on an electrode substrate, i.e., a current collector. The discharge device and a discharge process may be a device and a process of forming a layer containing an electrode material by directly discharging a liquid composition as long as the layer containing an electrode material can be formed on a discharge target. The discharge device and the discharge process may be a device and a process of forming a layer containing an electrode material by indirectly discharging a liquid composition.

### Other Devices and Other Processes

Other configurations included in the electrode manufacturing apparatus for manufacturing an electrode composite layer are not limited to any particular configuration and may be appropriately selected depending on the intended purpose, as long as the effects of the present embodiment are not impaired. Other processes included in the method for manufacturing an electrode composite layer are not limited to any particular process and may be appropriately selected depending on the intended purpose, as long as the effects of the present embodiment are not impaired. For example, a heating device and a heating process are examples of the configuration and the process included in the electrode manufacturing apparatus and the manufacturing method of the electrode composite layer.

### Heating Device and Heating Process

The heating device included the electrode manufacturing apparatus for manufacturing an electrode composite layer is a device that heats the liquid composition discharged by the discharge device. The heating process included in the manufacturing method for manufacturing an electrode composite layer is a process of heating the liquid composition discharged in the discharge process. The liquid composition is heated to dry the liquid composition layer.

### Structure to Form Layer Containing Electrode Material by Direct Discharge of Liquid Composition

As an example of the electrode manufacturing apparatus, an electrode manufacturing apparatus that forms an electrode composite layer containing an active material on an electrode substrate, i.e., a current collector, is described below. As illustrated in FIG. 14, the electrode manufacturing apparatus includes a discharge process device 150 and a heating process device 130. The discharge process device 150 performs a discharge process of applying a liquid composition onto a print base material 704 (i.e., a medium) having a discharge target to form a liquid composition layer. The heating process device 130 performs a heating process of heating the liquid composition layer to obtain an electrode composite layer.

The electrode manufacturing apparatus includes a conveyor 705 that conveys the print base material 704. The conveyor 705 conveys the print base material 704 to the discharge process device 150 and the heating process device 130 in this order at a preset speed. A method of producing the print base material 704 having the discharge target such as an active material layer is not limited to any particular method, and a known method can be appropriately selected. The discharge process device 150 includes the heads 100A and 100B that perform an application process of applying the liquid composition onto the print base material 704, a storage container 281b that stores a liquid composition 707, and a supply tube 281c that supplies the liquid composition 707 stored in the storage container 281b to the heads 100A and 100B.

The discharge process device 150 discharges the liquid composition 707 from the heads 100A and 100B so that the liquid composition 707 is applied onto the print base material 704 to form a liquid composition layer in a thin film shape. The storage container 281b may be integrated with the electrode manufacturing apparatus that forms the electrode composite layer or may be detachable from the electrode manufacturing apparatus. The storage container 281b may be a container additionally attachable to a container integrated with the electrode manufacturing apparatus for manufacturing the electrode composite layer or to a container detachable from the electrode manufacturing apparatus for manufacturing the electrode composite layer. The storage container 281b that stably stores the liquid composition 707 and the supply tube 281c that stably supplies the liquid composition 707 can be used.

The heating process device 130 performs a solvent removal process of heating and removing the solvent remaining in the liquid composition layer. Specifically, the solvent that remains in the liquid composition layer is heated and dried by a heater 703 of the heating process device 130. Accordingly, the solvent is removed from the liquid composition layer. Thus, the electrode composite layer is formed. The heating process device 130 may perform the solvent removal process under reduced pressure.

The heater 703 is not limited to any particular heater and may be appropriately selected depending on the intended purpose. For example, the heater 703 may be a substrate heater, an infrared (IR) heater, or a hot air heater. The heater 703 may be a combination of at least two of the substrate heater, the IR heater, and the hot air heater. A heating temperature and heating time can be appropriately selected according to the boiling point of the solvent contained in the liquid composition 707 or the thickness of a formed film.

The electrode manufacturing apparatus according to the present embodiment is used to discharge the liquid composition to a desired position on the discharge target. The electrode composite layer can be suitably used, for example, as a part of the configuration of an electrochemical element. The configuration of the electrochemical element other than the electrode composite layer is not limited to any particular configuration, and a known configuration can be appropriately selected. Examples of the configuration other than the electrode composite layer include a positive electrode, a negative electrode, and a separator.

Programs executed in the printer 1000 as a liquid discharge apparatus are preinstalled in the image memory 1003 such as a read-only memory (ROM).

Alternatively, the programs executed in the printer 1000 as a liquid discharge apparatus may be stored, in an installable or executable file format, in a computer readable carrier medium, such as a compact disc-read-only memory (CD-ROM), a flexible disk (FD), a compact disc-recordable (CD-R), and a digital versatile disc (DVD).

Various programs executed by the printer 1000 may be stored in a computer connected to a network such as the Internet and provided by being downloaded via the network. The program executed on the printer 1000 may be provided or distributed via a network such as the Internet.

The program executed on the printer 1000 has a modular configuration including the above-described units (the color division data generation unit 1071 and the discharge control unit 1072). The CPU (i.e., a processor) serving as actual hardware reads the program from the carrier medium described above and executes the program so as to load these units described above on a main storage device to implement the color division data generation unit 1071 and the discharge control unit 1072 on the main storage device.

Each of the functions (the color division data generation unit 1071 and the discharge control unit 1072) described above can be implemented by one or more processing circuits. The term "processing circuit or circuitry" in the present specification includes a programmed processor to execute each function by software, such as a processor implemented by an electronic circuit, and devices, such as an application-specific integrated circuit (ASIC), a digital signal processor (DSP), a field-programmable gate array (FPGA), and conventional circuit components arranged to perform the recited functions.

In the present disclosure, the term "liquid discharge apparatus" includes a liquid discharge head or a liquid discharge device (unit) and drives the liquid discharge head to discharge liquid. The term "liquid discharge apparatus" used herein includes, in addition to apparatuses to discharge liquid to a medium onto which liquid can adhere, apparatuses to discharge the liquid into gas (air) or a different liquid.

For example, the "liquid discharge apparatus" may further include devices relating to feeding, conveying, and ejecting of the medium onto which liquid can adhere and also include a pretreatment device and an aftertreatment device.

The "liquid discharge apparatus" may be, for example, an image forming apparatus to form an image on a sheet by discharging ink, or a three-dimensional fabrication apparatus to discharge fabrication liquid to a powder layer in which powder material is formed in layers to form a three-dimensional object.

The "liquid discharge apparatus" is not limited to an apparatus that discharges liquid to visualize meaningful images such as letters or figures. For example, the liquid discharge apparatus may be an apparatus that forms patterns having no meaning or an apparatus that fabricates three-dimensional images.

The above-described term "medium onto which liquid can adhere" represents a medium on which liquid is at least temporarily adhered, a medium on which liquid is adhered and fixed, or a medium into which liquid adheres and permeates. Specific examples of the "medium onto which liquid can adhere" include, but are not limited to, a recording medium such as a paper sheet, recording paper, a recording sheet of paper, a film, or cloth, an electronic component such as an electronic substrate or a piezoelectric element, and a medium such as layered powder, an organ model, or a testing cell. The "medium onto which liquid can adhere" includes any medium to which liquid adheres, unless otherwise specified.

Examples of materials for the "medium onto which liquid can adhere" include any materials to which liquid can adhere even temporarily, such as paper, thread, fiber, fabric, leather, metal, plastic, glass, wood, and ceramic.

Further, the term "liquid" is not limited to a particular liquid and includes any liquid having a viscosity or a surface tension that can be discharged from the head. However, preferably, the viscosity of the liquid is not greater than 30 millipascal-second (mPa·s) under ordinary temperature and ordinary pressure or by heating or cooling. Examples of the liquid to be discharged include a solution, a suspension, or an emulsion including, for example, a solvent, such as water or an organic solvent; a colorant, such as dye or pigment; a functional material, such as a polymerizable compound, a resin, or a surfactant; a biocompatible material, such as deoxyribonucleic acid (DNA), amino acid, protein, or calcium; and an edible material, such as a natural colorant. Such a solution, a suspension, or an emulsion can be used for, e.g., inkjet ink; surface treatment liquid; a liquid for forming an electronic element component, a light-emitting element component, or an electronic circuit resist pattern; or a material solution for three-dimensional fabrication.

The term "liquid discharge apparatus" may be an apparatus in which the liquid discharge head and the medium onto which liquid can adhere move relative to each other. However, the liquid discharge apparatus is not limited to such an apparatus. For example, the liquid discharge apparatus may be a serial head apparatus that moves the liquid discharge head or a line head apparatus that does not move the liquid discharge head.

Examples of the liquid discharge apparatus further include: a treatment liquid applying apparatus that discharges a treatment liquid onto a sheet to apply the treatment liquid to the surface of the sheet, for reforming the surface of the sheet; and an injection granulation apparatus that injects a composition liquid, in which a raw material is dispersed in a solution, through a nozzle to granulate fine particle of the raw material.

The embodiments described above are presented as examples and are not intended to limit the scope of the present disclosure. The above-described embodiments can be implemented in other various forms, and various omissions, replacements, and changes can be made without departing from the scope of the present disclosure. In addition, the embodiments and modifications or variations thereof are included in the scope and the gist of the present disclosure, and also included in the scope of the appended claims and the equivalent thereof.

Aspects of the present disclosure are, for example, as follows.

### Aspect 1

A liquid discharge apparatus includes multiple heads and a controller. The multiple heads each have multiple nozzle arrays each having multiple nozzles to selectively discharge liquid droplets from the nozzles onto a medium. The controller controls discharge of the liquid droplets from the nozzles. The liquid discharge apparatus has a nozzle overlapping region at ends of the nozzle arrays, in an array direction, of a first head and a second head disposed adjacent to each other. In the nozzle overlapping region, the controller discharges multiple liquid droplets to be landed in a direction of the nozzle arrays from the nozzles of the first head and the nozzles of the second head, and discharges the multiple liquid droplets to be landed in a direction orthogonal to the nozzle arrays from only the nozzles of the first head or only the nozzles of the second head. The controller changes a mask pattern that selects discharge nozzles to discharge the liquid droplets and non-discharge nozzles not to discharge the liquid droplets.

In other words, a liquid discharge apparatus includes multiple heads and a controller. The multiple heads discharge liquid droplets onto a medium in a discharge direction to form an image on the medium conveyed in a conveyance direction orthogonal to the discharge direction. The multiple heads include a first head and a second head. The first head has first nozzle arrays each having first nozzles arrayed in an array direction orthogonal to the discharge direction and the conveyance direction. The first nozzle arrays are arrayed in the conveyance direction and have a first overlapping region at one end of the first head in the array direction. The second head is disposed adjacent to the first head in the conveyance direction. The second head has second nozzle arrays each having second nozzles arrayed in the array direction. The second nozzle arrays are arrayed in the conveyance direction and have a second overlapping region at another end of the second head opposite to the one end of the first head in the array direction. The second overlapping region is overlapped with the first overlapping region in the array direction. The controller forms a first mask pattern and a second mask pattern. The first mask pattern selects first discharge nozzles to discharge the liquid droplets and first non-discharge nozzles not discharging the liquid droplets from the first nozzles in the first nozzle arrays in the first overlapping region. The second mask pattern selects second discharge nozzles to discharge the liquid droplets and second non-discharge nozzles not discharging the liquid droplets from the second nozzles in the second nozzle arrays in the second overlapping region. The controller controls the first head and the second head to alternately discharge the liquid droplets from the first discharge nozzles and the second discharge nozzles in the same row in the array direction on the medium, and discharge the liquid droplets from only one of the first discharge nozzles or the second discharge nozzles in the same column in the conveyance direction on the medium. Further, the controller causes a pattern of the first discharge nozzles in the first mask pattern to differ from a pattern of the second discharge nozzles in the second mask pattern.

In addition, the controller changes the pattern of the first discharge nozzles in the first mask pattern in the conveyance direction and the pattern of the second discharge nozzles in the second mask pattern in the conveyance direction.

### Aspect 2

A printer includes a liquid discharge apparatus, a system controller, and a mover. The liquid discharge apparatus includes multiple heads and a controller. The multiple heads each have multiple nozzle arrays each having multiple nozzles to selectively discharge liquid droplets from the nozzles onto a medium. The controller controls discharge of the liquid droplets from the nozzles. The liquid discharge apparatus has a nozzle overlapping region at ends of the nozzle arrays, in an array direction, of a first head and a second head disposed adjacent to each other. In the nozzle overlapping region, the controller discharges multiple liquid droplets to be landed in a direction of the nozzle arrays from the nozzles of the first head and the nozzles of the second head, and discharges the multiple liquid droplets to be landed in a direction orthogonal to the nozzle arrays from only the nozzles of the first head or only the nozzles of the second head. The controller changes a mask pattern that selects discharge nozzles to discharge the liquid droplets and non-discharge nozzles not to discharge the liquid droplets. The system controller drives the liquid discharge apparatus to discharge the liquid droplets onto the medium. The mover moves the medium at a speed of relative movement of the medium relative to the multiple heads of 200 mm/s.

In other words, a printer includes the liquid discharge apparatus according to Aspect 1, a conveyor to convey at least one of the multiple heads and the medium relative to another in the conveyance direction at a speed of relative movement of 200 mm/s or more, and a system controller configured to drive the liquid discharge apparatus and the conveyor to selectively discharge the liquid droplets onto the medium to form an image on the medium.

### Aspect 3

In the printer to Aspect 2, the first head is disposed upstream from the second head in the direction of the relative movement. In the nozzle overlapping region, a ratio at which the first head selects the discharge nozzles is smaller than a ratio at which the second head selects the discharge nozzles.

In other words, the first head is disposed upstream from the second head (100B) in the conveyance direction. The controller sets a first ratio of a number of the first discharge nozzles to a total number of the first nozzles in the first overlapping region in the first head (100A) and sets a second ratio of a number of the second discharge nozzles (2a) to a total number of the second nozzles (2a, 2b) in the second overlapping region in the second head (100B). The first ratio is smaller than the second ratio.

### Aspect 4

In the printer according to Aspect 2, the first head is disposed upstream from the second head in the direction of the relative movement. The nozzles include a first discharge nozzle that discharges the liquid droplets having a first volume and a second discharge nozzle that discharges the liquid droplets having a second volume smaller than the first volume. In the nozzle overlapping region, a ratio at which the first head selects the second discharge nozzle is smaller than a ratio at which the second head selects the second discharge nozzle.

In other words, the first head is disposed upstream from the second head in the conveyance direction. The controller causes the first head to discharge the liquid droplets having a first volume from a first part of the first discharge nozzles and discharge the liquid droplets having a second volume smaller than the first volume from a second part other than the first part of the first discharge nozzles. The controller causes the second head to discharge the liquid droplets having the first volume from a third part of the second discharge nozzles and discharge the liquid droplets having the second volume smaller than the first volume from a fourth part other than the third part of the second discharge nozzles. The controller sets a first ratio of a number of the first discharge nozzles in the second part to a total number of the first nozzles in the first overlapping region in the first head and sets a second ratio of a number of the second discharge nozzles in the fourth part to a total number of the second nozzles in the second overlapping region in the second head. The first ratio is smaller than the second ratio.

### Aspect 5

In the printer according to any one of Aspect 2 to 4, the first head is disposed upstream from the second head in the direction of the relative movement. In the nozzle overlapping region, the mask pattern of the first head includes a first region around a head end portion thereof on the upstream side in the direction of the relative movement, and the mask pattern of the second head includes a second region around a head end portion thereof on the upstream side in the direction of the relative movement. When the speed of the relative movement of the medium relative to the multiple heads and a distance between the multiple heads and the medium satisfy predetermined conditions, a ratio at which the first head selects the discharge nozzles is different between the first region and a region other than the first region, and a ratio at which the second head selects the discharge nozzles is different between the second region and a region other than the second region.

In other words, the first head is disposed upstream from the second head in the conveyance direction. The first mask pattern has a first region adjacent to an upstream end of the first head in the conveyance direction. The second mask pattern has a second region adjacent to an upstream end of the second head in the conveyance direction. The controller sets a first ratio of a number of the first discharge nozzles in the first region to a total number of the first nozzles in the first overlapping region, sets a second ratio of the number of the first discharge nozzles in a third region other than the first region to the total number of the first nozzles in the first overlapping region, causes the first ratio to differ from the second ratio when the speed of the relative movement of the medium relative to the multiple heads and a distance between the medium and the multiple heads satisfy predetermined conditions, sets a third ratio of a number of the second discharge nozzles in the second region to a total number of the second nozzles in the second overlapping region, sets a fourth ratio of the number of the second discharge nozzles in a fourth region other than the third region to the total number of the second nozzles in the second overlapping region, and causes the third ratio to differ from the fourth ratio when the speed of the relative movement of the medium relative to the multiple heads and the distance between the medium and the multiple heads satisfy the predetermined conditions.

### Aspect 6

In the printer according to Aspect 5, the discharge nozzles are not selected in the first region and the second region.

In other words, the controller causes the first head and the second head not to discharge the liquid droplets in the first region and the second region, respectively.

### Aspect 7

In the printer according to Aspect 5, the ratio at which the first head selects the discharge nozzles is smaller in the first region than in the region other than the first region, and the ratio at which the second head selects the discharge nozzles is smaller in the second region than in the region other than the second region.

In other words, the controller sets the ratio of the first discharge nozzles to the first nozzles to be smaller in the first region than in the third region other than the first region in the first overlapping region, and sets the ratio of the second discharge nozzles to the second nozzles to be smaller in the second region than in the fourth region other than the second region in the second overlapping region.

### Aspect 8

In the printer according to Aspect 5, a ratio of the discharge nozzles selected in the first region is smaller than a ratio of the discharge nozzles selected in the second region.

In other words, the controller sets the first ratio of the number of the first discharge nozzles to the total number of the first nozzles in the first region to be smaller than the second ratio of the number of the second discharge nozzles to the total number of the second nozzles in the second region.

### Aspect 9

In the printer according to Aspect 5, the nozzles include a first discharge nozzle that discharges the liquid droplets having a first volume and a second discharge nozzle that discharges the liquid droplets having a second volume smaller than the first volume. A ratio at which the first head selects the first discharge nozzle is larger in the first region than in the region other than the first region, and a ratio at which the second head selects the first discharge nozzles is larger in the second region than in the region other than the second region.

In other words, the controller causes the first head to discharge the liquid droplets having a first volume from a first part of the first discharge nozzles and discharge the liquid droplets having a second volume smaller than the first volume from a second part of the first discharge nozzles. The controller causes the second head to discharge the liquid droplets having the first volume from a third part of the second discharge nozzles and discharge the liquid droplets having the second volume smaller than the first volume from a fourth part of the second discharge nozzles. The controller sets the first ratio of the number of the first discharge nozzles in the first part to the total number of the first nozzles in the first overlapping region to be larger in the first region than in the third region other than the first region and sets the second ratio of the number of the second discharge nozzles in the third part to the total number of the second nozzles in the second overlapping region to be larger in the second region than in the fourth region other than the second region.

### Aspect 10

In the printer according to Aspect 5, the sizes of the first region and the second region are set based on at least one of the speed of the relative movement, a resolution of the multiple liquid droplets, and a volume of the liquid droplets.

In other words, the controller determines sizes of the first region and the second region based on at least one of the speed of the relative movement, a resolution of the liquid droplets, and a volume of the liquid droplets.

### Aspect 11

A liquid discharge method is used in a liquid discharge head including multiple heads. The multiple heads each have multiple nozzle arrays each having multiple nozzles to selectively discharge liquid droplets from the nozzles onto a medium. The liquid discharge method includes a control step to control discharge of the liquid droplets from the nozzles. The liquid discharge head has a nozzle overlapping region at ends of the nozzle arrays, in an array direction, of a first head and a second head disposed adjacent to each other. In the nozzle overlapping region, the control step discharges multiple liquid droplets to be landed in a direction of the nozzle arrays from the nozzles of the first head and the nozzles of the second head, and discharges the multiple liquid droplets to be landed in a direction orthogonal to the nozzle arrays from only the nozzles of the first head or only the nozzles of the second head. The control step changes a mask pattern that selects discharge nozzles to discharge the liquid droplets and non-discharge nozzles not to discharge the liquid droplets.

In other words, a liquid discharge method includes discharging liquid droplets onto a medium from multiple heads in a discharge direction to form an image on the medium conveyed in a conveyance direction orthogonal to the discharge direction. The multiple heads include a first head and a second head. The first head has first nozzle arrays each having first nozzles arrayed in an array direction orthogonal to the discharge direction and the conveyance direction. The first nozzle arrays are arrayed in the conveyance direction and have a first overlapping region at one end of the first head in the array direction. The second head is disposed adjacent to the first head in the conveyance direction. The second head has second nozzle arrays each having second nozzles arrayed in the array direction. The second nozzle arrays are arrayed in the conveyance direction and have a second overlapping region at another end of the second head opposite to the one end of the first head in the array direction. The second overlapping region is overlapped with the first overlapping region in the array direction. The liquid discharge method further includes forming a first mask pattern and a second mask pattern. The first mask pattern selects first discharge nozzles to discharge the liquid droplets and first non-discharge nozzles not discharging the liquid droplets from the first nozzles in the first nozzle arrays in the first overlapping region. The second mask pattern selects second discharge nozzles to discharge the liquid droplets and second non-discharge nozzles not discharging the liquid droplets from the second nozzles in the second nozzle arrays in the second overlapping region. The liquid discharge method further includes controlling the first head and the second head to alternately discharge the liquid droplets from the first discharge nozzles and the second discharge nozzles in the same row in the array direction on the medium and discharge the liquid droplets from only one of the first discharge nozzles or the second discharge nozzles in the same column in the conveyance direction on the medium. The liquid discharge method further includes causing a pattern of the first discharge nozzles in the first mask pattern to differ from a pattern of the second discharge nozzles in the second mask pattern.

### Aspect 12

A program causes a computer that controls a liquid discharge head to function as a controller. The liquid discharge head includes multiple heads each having multiple nozzle arrays each having multiple nozzles to selectively discharge liquid droplets from the nozzles onto a medium. The controller controls discharge of the liquid droplets from the nozzles. The liquid discharge head has a nozzle overlapping region at ends of the nozzle arrays, in an array direction, of a first head and a second head disposed adjacent to each other. In the nozzle overlapping region, the controller discharges multiple liquid droplets to be landed in a direction of the nozzle arrays from the nozzles of the first head and the nozzles of the second head, and discharges the multiple liquid droplets to be landed in a direction orthogonal to the nozzle arrays from only the nozzles of the first head or only the nozzles of the second head. The controller changes a mask pattern that selects discharge nozzles to discharge the liquid droplets and non-discharge nozzles not to discharge the liquid droplets.

In other words, a carrier medium carrying computer readable code for controlling a computer system to carry out a method, includes discharging liquid droplets onto a medium from multiple heads in a discharge direction to form an image on the medium conveyed in a conveyance direction orthogonal to the discharge direction. The multiple heads include a first head and a second head. The first head has first nozzle arrays each having first nozzles arrayed in an array direction orthogonal to the discharge direction and the conveyance direction. The first nozzle arrays are arrayed in the conveyance direction and have a first overlapping region at one end of the first head in the array direction. The second head is disposed adjacent to the first head in the conveyance direction. The second head has second nozzle arrays each having second nozzles arrayed in the array direction. The second nozzle arrays are arrayed in the conveyance direction and have a second overlapping region at another end of the second head opposite to the one end of the first head in the array direction. The second overlapping region is overlapped with the first overlapping region in the array direction. The method further includes forming a first mask pattern and a second mask pattern. The first mask pattern selects first discharge nozzles to discharge the liquid droplets and first non-discharge nozzles not discharging the liquid droplets from the first nozzles in the first nozzle arrays in the first overlapping region. The second mask pattern selects second discharge nozzles to discharge the liquid droplets and second non-discharge nozzles not discharging the liquid droplets from the second nozzles in the second nozzle arrays in the second overlapping region. The method further includes controlling the first head and the second head to alternately discharge the liquid droplets from the first discharge nozzles and the second discharge nozzles in the same row in the array direction on the medium and discharge the liquid droplets from only one of the first discharge nozzles or the second discharge nozzles in the same column in the conveyance direction on the medium. The method further includes causing a pattern of the first discharge nozzles in the first mask pattern to differ from a pattern of the second discharge nozzles in the second mask pattern.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A liquid discharge apparatus comprising:
multiple heads (100A, 100B) to discharge liquid droplets onto a medium (10) in a discharge direction to form an image on the medium (10) conveyed in a conveyance direction orthogonal to the discharge direction, the multiple heads (100A, 100B) including:
a first head (100A) having first nozzle arrays (200) each having first nozzles (1a, 1b) arrayed in an array direction orthogonal to the discharge direction and the conveyance direction,
the first nozzle arrays (200) arrayed in the conveyance direction and having a first overlapping region at one end of the first head (100A) in the array direction; and
a second head (100B) adjacent to the first head (100A) in the conveyance direction, the second head (100B) having second nozzle arrays (200) each having second nozzles (2a, 2b) arrayed in the array direction,
the second nozzle arrays (200) arrayed in the conveyance direction and having a second overlapping region at another end of the second head (100B) opposite to the one end of the first head (100A) in the array direction, and
the second overlapping region overlapped with the first overlapping region in the array direction; and
a controller (1007) configured to form:
a first mask pattern to select first discharge nozzles (1a) to discharge the liquid droplets and first non-discharge nozzles (1b) not discharging the liquid droplets from the first nozzles (1a, 1b) in the first nozzle arrays (200) in the first overlapping region; and
a second mask pattern to select second discharge nozzles (2a) to discharge the liquid droplets and second non-discharge nozzles (2b) not discharging the liquid droplets from the second nozzles (2a, 2b) in the second nozzle arrays (200) in the second overlapping region; and
wherein the controller (1007) is further configured to:
control the first head (100A) and the second head (100B) to:
alternately discharge the liquid droplets from the first discharge nozzles (1a) and the second discharge nozzles (2a) in the same row in the array direction on the medium (10); and
discharge the liquid droplets from only one of the first discharge nozzles (1a) or the second discharge nozzles (2a) in the same column in the conveyance direction on the medium; and
cause a pattern of the first discharge nozzles (1a) in the first mask pattern to differ from a pattern of the second discharge nozzles (2a) in the second mask pattern.

2. The liquid discharge apparatus according to claim 1,
wherein the controller (1007) is further configured to change:
the pattern of the first discharge nozzles (1a) in the first mask pattern in the conveyance direction; and
the pattern of the second discharge nozzles (2a) in the second mask pattern in the conveyance direction.

3. A printer (1000) comprising:
the liquid discharge apparatus according to claim 1 or 2;
a conveyor (3, 705) to convey at least one of the multiple heads (100A, 100B) and the medium (10) relative to another in the conveyance direction at a speed of relative movement of 200 mm/s or more; and
a system controller (1002) configured to drive the liquid discharge apparatus and the conveyor (3, 705) to selectively discharge the liquid droplets onto the medium (10) to form an image on the medium (10).

4. The printer (1000) according to claim 3,
wherein the first head (100A) is disposed upstream from the second head (100B) in the conveyance direction, and
the controller (1007) is further configured to:
set a first ratio of a number of the first discharge nozzles (1a) to a total number of the first nozzles (1a, 1b) in the first overlapping region in the first head (100A); and
set a second ratio of a number of the second discharge nozzles (2a) to a total number of the second nozzles (2a, 2b) in the second overlapping region in the second head (100B), and
the first ratio is smaller than the second ratio.

5. The printer (1000) according to claim 3,
wherein the first head (100A) is disposed upstream from the second head (100B) in the conveyance direction, and
the controller (1007) is further configured to:
cause the first head (100A) to:
discharge the liquid droplets having a first volume from a first part of the first discharge nozzles (1a); and
discharge the liquid droplets having a second volume smaller than the first volume from a second part other than the first part of the first discharge nozzles (1a);
cause the second head (100B) to:
discharge the liquid droplets having the first volume from a third part of the second discharge nozzles (2a); and
discharge the liquid droplets having the second volume smaller than the first volume from a fourth part other than the third part of the second discharge nozzles (2a); and
set a first ratio of a number of the first discharge nozzles (1a) in the second part to a total number of the first nozzles (1a, 1b) in the first overlapping region in the first head (100A); and
set a second ratio of a number of the second discharge nozzles (2a) in the fourth part to a total number of the second nozzles (2a, 2b) in the second overlapping region in the second head (100B), and
the first ratio is smaller than the second ratio.

6. The printer (1000) according to any one of claims 3 to 5,
wherein the first head (100A) is disposed upstream from the second head (100B) in the conveyance direction,
the first mask pattern has a first region adjacent to an upstream end of the first head (100A) in the conveyance direction,
the second mask pattern has a second region adjacent to an upstream end of the second head (100B) in the conveyance direction, and
the controller (1007) is further configured to:
set a first ratio of a number of the first discharge nozzles (1a) in the first region to a total number of the first nozzles (1a, 1b) in the first overlapping region;
set a second ratio of the number of the first discharge nozzles (1a) in a third region other than the first region to the total number of the first nozzles (1a, 1b) in the first overlapping region;
cause the first ratio to differ from the second ratio when the speed of the relative movement of the medium (10) relative to the multiple heads (100A, 100B) and a distance between the medium (10) and the multiple heads (100A, 100B) satisfy predetermined conditions;
set a third ratio of a number of the second discharge nozzles (2a) in the second region to a total number of the second nozzles (2a, 2b) in the second overlapping region;
set a fourth ratio of the number of the second discharge nozzles (2a) in a fourth region other than the third region to the total number of the second nozzles (2a, 2b) in the second overlapping region; and
cause the third ratio to differ from the fourth ratio when the speed of the relative movement of the medium (10) relative to the multiple heads (100A, 100B) and the distance between the medium (10) and the multiple heads (100A, 100B) satisfy the predetermined conditions.

7. The printer (1000) according to claim 6,
wherein the controller (1007) is further configured to cause the first head (100A) and the second head (100B) not to discharge the liquid droplets in the first region and the second region, respectively.

8. The printer (1000) according to claim 6,
wherein the controller (1007) is further configured to set:
the first ratio of the number of the first discharge nozzles (1a) to the total number of the first nozzles (1a, 1b) to be smaller in the first region than in the third region other than the first region in the first overlapping region; and
the second ratio of the number of the second discharge nozzles (2a) to the total number of the second nozzles (2a, 2b) to be smaller in the second region than in the fourth region other than the second region in the second overlapping region.

9. The printer (1000) according to claim 6,
wherein the controller (1007) is further configured to set the first ratio of the number of the first discharge nozzles (1a) to the total number of the first nozzles (1a, 1b) in the first region to be smaller than the second ratio of the number of the second discharge nozzles (2a) to the total number of the second nozzles (2a, 2b) in the second region.

10. The printer (1000) according to claim 6,
wherein the controller (1007) is further configured to:
cause the first head (100A) to:
discharge the liquid droplets having a first volume from a first part of the first discharge nozzles (1a); and
discharge the liquid droplets having a second volume smaller than the first volume from a second part of the first discharge nozzles (1a);
cause the second head (100B) to:
discharge the liquid droplets having the first volume from a third part of the second discharge nozzles (2a); and
discharge the liquid droplets having the second volume smaller than the first volume from a fourth part of the second discharge nozzles (2a); and
set:
the first ratio of the number of the first discharge nozzles (1a) in the first part to the total number of the first nozzles (1a, 1b) in the first overlapping region to be larger in the first region than in the third region other than the first region; and
the second ratio of the number of the second discharge nozzles (2a) in the third part to the total number of the second nozzles (2a, 2b) in the second overlapping region to be larger in the second region than in the fourth region other than the second region.

11. The printer (1000) according to claim 6,
wherein the controller (1007) is further configured to determine sizes of the first region and the second region based on at least one of the speed of the relative movement, a resolution of the liquid droplets, and a volume of the liquid droplets.

12. A liquid discharge method comprising:
discharging liquid droplets onto a medium (10) from multiple heads (100A, 100B) in a discharge direction to form an image on the medium (10) conveyed in a conveyance direction orthogonal to the discharge direction, the multiple heads (100A, 100B) including:
a first head (100A) having first nozzle arrays (200) each having first nozzles (1a, 1b) arrayed in an array direction orthogonal to the discharge direction and the conveyance direction,
the first nozzle arrays (200) arrayed in the conveyance direction and having a first overlapping region at one end of the first head (100A) in the array direction; and
a second head (100B) adjacent to the first head (100A) in the conveyance direction, the second head (100B) having second nozzle arrays (200) each having second nozzles (2a, 2b) arrayed in the array direction,
the second nozzle arrays (200) arrayed in the conveyance direction and having a second overlapping region at another end of the second head (100B) opposite to the one end of the first head (100A) in the array direction, and
the second overlapping region overlapped with the first overlapping region in the array direction;
forming:
a first mask pattern to select first discharge nozzles (1a) to discharge the liquid droplets and first non-discharge nozzles (1b) not discharging the liquid droplets from the first nozzles (1a, 1b) in the first nozzle arrays (200) in the first overlapping region; and
a second mask pattern to select second discharge nozzles (2a) to discharge the liquid droplets and second non-discharge nozzles (2b) not discharging the liquid droplets from the second nozzles (2a, 2b) in the second nozzle arrays (200) in the second overlapping region;
controlling the first head (100A) and the second head (100B) to:
alternately discharge the liquid droplets from the first discharge nozzles (1a) and the second discharge nozzles (2a) in the same row in the array direction on the medium (10); and
discharge the liquid droplets from only one of the first discharge nozzles (1a) or the second discharge nozzles (2a) in the same column in the conveyance direction on the medium; and
causing a pattern of the first discharge nozzles (1a) in the first mask pattern to differ from a pattern of the second discharge nozzles (2a) in the second mask pattern.

13. A carrier medium carrying computer readable code for controlling a computer system to carry out a method, comprising:
discharging liquid droplets onto a medium (10) from multiple heads (100A, 100B) in a discharge direction to form an image on the medium (10) conveyed in a conveyance direction orthogonal to the discharge direction, the multiple heads (100A, 100B) including:
a first head (100A) having first nozzle arrays (200) each having first nozzles (1a, 1b) arrayed in an array direction orthogonal to the discharge direction and the conveyance direction,
the first nozzle arrays (200) arrayed in the conveyance direction and having a first overlapping region at one end of the first head (100A) in the array direction; and
a second head (100B) adjacent to the first head (100A) in the conveyance direction, the second head (100B) having second nozzle arrays (200) each having second nozzles (2a, 2b) arrayed in the array direction,
the second nozzle arrays (200) arrayed in the conveyance direction and having a second overlapping region at another end of the second head (100B) opposite to the one end of the first head (100A) in the array direction, and
the second overlapping region overlapped with the first overlapping region in the array direction;
forming:
a first mask pattern to select first discharge nozzles (1a) to discharge the liquid droplets and first non-discharge nozzles (1b) not discharging the liquid droplets from the first nozzles (1a, 1b) in the first nozzle arrays (200) in the first overlapping region; and
a second mask pattern to select second discharge nozzles (2a) to discharge the liquid droplets and second non-discharge nozzles (2b) not discharging the liquid droplets from the second nozzles (2a, 2b) in the second nozzle arrays (200) in the second overlapping region;
controlling the first head (100A) and the second head (100B) to:
alternately discharge the liquid droplets from the first discharge nozzles (1a) and the second discharge nozzles (2a) in the same row in the array direction on the medium (10); and
discharge the liquid droplets from only one of the first discharge nozzles (1a) or the second discharge nozzles (2a) in the same column in the conveyance direction on the medium; and
causing a pattern of the first discharge nozzles (1a) in the first mask pattern to differ from a pattern of the second discharge nozzles (2a) in the second mask pattern.
